Europäisches Patentamt

European Patent Office

Office européen des brevets

(11) Veröffentlichungsnummer: **0 399 225**

**A1**

(12) # EUROPÄISCHE PATENTANMELDUNG

(21) Anmeldenummer: **90107744.6**

(22) Anmeldetag: **24.04.90**

(51) Int. Cl.⁵: **G11B 7/085**

(30) Priorität: **20.05.89 DE 3916462**

(43) Veröffentlichungstag der Anmeldung:
**28.11.90 Patentblatt 90/48**

(84) Benannte Vertragsstaaten:
**AT BE CH DE ES FR GB GR IT LI LU NL SE**

(71) Anmelder: **Deutsche Thomson-Brandt GmbH**
**Hermann-Schwer-Strasse 3 Postfach 1307**
**D-7730 Villingen-Schwenningen(DE)**

(72) Erfinder: **Füldner, Friedrich**
**Wilstorfstrasse 19**
**D-7730 Villingen-Schwenningen(DE)**
Erfinder: **Gleim, Günter**
**Oberer Sonnenbühl 22**
**D-7730 Villingen(DE)**

(54) **Verfahren zum Spurspringen.**

(57)
1. Verfahren zum Spurspringen für einen Spurregelkreis mit einer optischen Abtastvorrichtung, bei dem ein sinusförmiges Spurfehlersignal erzeugt wird.

2. Ein CD-Spieler ist z.B. mit einem Spurregelkreis ausgestattet, der einen Lichstrahl entlang den Datenspuren einer CD führt. Zum Springen über mehrere Datenspuren, um z.B. ein anderes Musikstück zu suchen, wird aber der Spurregelkreis geöffnet. Mittels eines Zählers und einer Richtungslogik wird bei offenem Regelkreis festgestellt, wieviele Spuren der Lichtstrahl gekreuzt hat.

2. Um das Spurspringen bei geschlossenem Regelkreis zu ermöglichen, wird dem Spurregelkreis (RV) ein Offset (OF) zugeführt, der so bemessen ist, daß der die Daten abtastende Lichstrahl (L1) teilweise auf die Spur (S0) und teilweise auf den Rasen (R1) strahlt. Zum Springen über n Spuren wird das Spurfehlersignal (TE) 2n-mal invertiert. Der Offset (OF) wird spätestens nach der letzten Invertierung des Spurfehlersignals wieder vom Spurregelkreis getrennt.

2. CD-Spieler, Videoplattenspieler, magnetooptische Geräte, DRAW-Disc-Spieler.

Fig. 5

EP 0 399 225 A1

## Verfahren zum Spurspringen

Die Erfindung betrifft ein Verfahren zum Spurspringen für einen Spurregelkreis mit einer optischen Abtastvorrichtung, bei der ein erster und ein zweiter Lichtstrahl von einem Aufzeichnungsträger auf je eine Photodiode reflektiert werden und bei der aus den Ausgangssignalen der beiden Photodetektoren durch Differenzbildung ein sinusförmiges Spurfehlersignal, die Abweichung des Istwerts vom Sollwert, erzeugt wird.

CD-Spieler, Videoplattenspieler, DRAW-Disc-Spieler oder magneto-optische Aufzeichnungs- und Wiedergabegeräte sind beispielsweise mit einer optischen Abtastvorrichtung ausgestattet.

Aufbau und Funktion einer optischen Abtastvorrichtung, eines sogenannten optical pick-ups, sind in Electronic Components & Applications, Vol. 6, No. 4, 1984 auf Seite 209 - 215 beschrieben.

Der von einer Laserdiode ausgesendete Lichtstrahl wird mittels Linsen auf die CD-Platte fokussiert und von dort auf einen Photodetektor reflektiert. Aus dem Ausgangssignal des Photodetektors werden die auf der CD-Platte gespeicherten Daten und der Istwert für den Fokus- und für den Spurregelkreis gewonnen. In der genannten Literaturstelle wird die Abweichung des Istwerts vom Sollwert für den Fokusregelkreis als focusing error bezeichnet, während für die Abweichung des Istwerts vom Sollwert des Spurregelkreises der Ausdruck radial trakking error gewählt ist.

Als Stellglied für den Fokusregelkreis dient eine Spule, über deren Magnetfeld eine Objektivlinse entlang der optischen Achse bewegbar ist. Der Fokusregelkreis bewirkt nun durch Verschieben der Objektivlinse, daß der von der Laserdiode ausgesendete Lichtstrahl stets auf die CD-Platte fokussiert wird. Mittels des Spurregelkreises, der oft auch als Radialantrieb bezeichnet wird, ist die optische Abtastvorrichtung bezüglich der CD-Platte in radialer Richtung verschiebbar. Dadurch kann der Lichtstrahl auf den spiralförmigen Datenspuren der CD-Platte geführt werden.

Bei einigen Geräten ist der Radialantrieb aus einem sogenannten Grob- und einem sogenannten Feinantrieb aufgebaut. Der Grobantrieb ist beispielsweise als Spindel ausgeführt, mittels der die gesamte optische Abtastvorrichtung aus der Laserdiode, den Linsen, dem Prismenstrahlteiler und dem Photodetektor radial verschiebbar ist. Mit dem Feinantrieb ist der Lichtstrahl zusätzlich in radialer Richtung verschiebbar oder z.B. um einen vorgebbaren kleinen Winkel kippbar. Mittels des Feinantriebs kann daher der Lichtstrahl ein kleines Stück - etwa 1 mm - entlang einem Radius der CD-Platte gefahren werden.

Um eine einwandfreie Wiedergabe der Daten, seien es nun z.B. Bild und Ton bei einem Videoplattenspieler oder bloß der Ton bei einem CD-Spieler oder die Daten einer magneto-optischen Platte, zu erzielen, ist neben einer genauen Fokussierung des Lichtstrahls auf die Platte eine präzise Führung entlang den Datenspuren der Platte erforderlich.

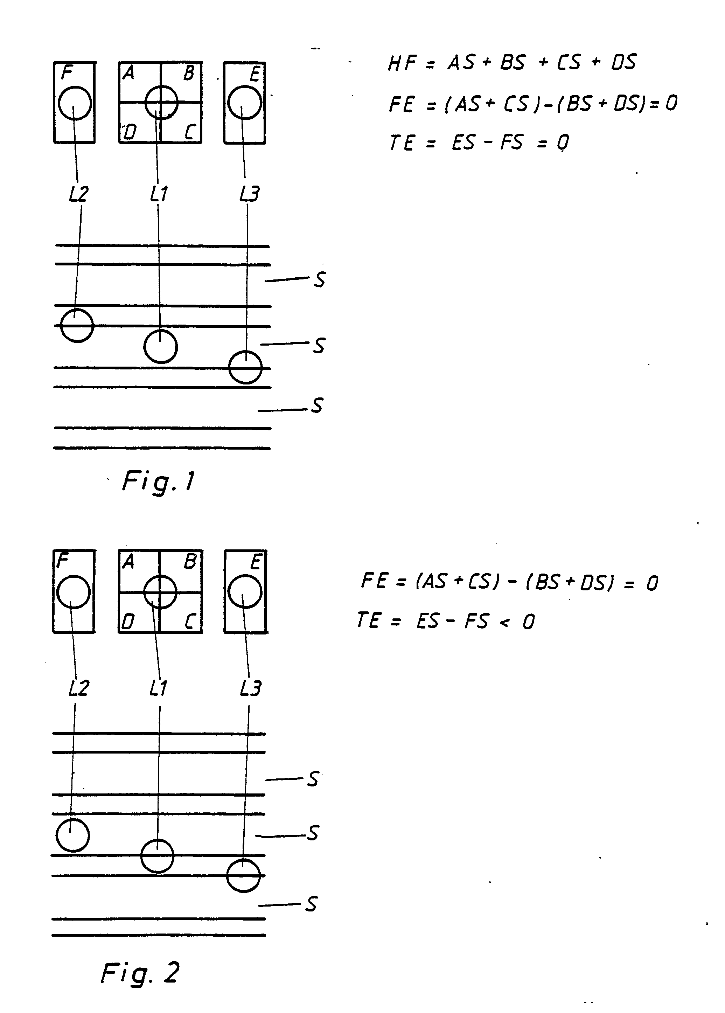

In der Figur 1 ist der Photodetektor PD der optischen Abtastvorrichtung eines CD-Spielers gezeigt, bei der drei Laserstrahlen L1, L2 und L3 auf die CD-Platte fokussiert werden. Die Laserstrahlen L2 und L3 sind die Beugungsstrahlen + 1. und -1. Ordnung. Eine derartige Abtastvorrichtung wird in der eingangs genannten Literaturstelle als Three-Beam-Pick-Up bezeichnet, weil sie mit drei Lichtstrahlen arbeitet.

Beim Photodetektor sind vier quadratförmige Photodioden A, B, C und D so zusammengefügt, daß sie wiederum ein Quadrat bilden. Vor dem aus den vier Photodioden A, B, C und D gebildeten Quadrat liegt eine rechteckige Photodiode E; hinter dem Quadrat ist eine weitere Photodiode F vorgesehen. Der mittlere Laserstrahl L1, der auf die vier Photodioden A, B, C und D fokussiert wird, erzeugt das Datensignal $HF = AS + BS + CS + DS$ und das Fokusfehlersignal $FE = (AS + CS) - (BS + DS)$. Die beiden äußeren Lichtstrahlen L2 und L3, von denen der vordere L3 auf die Photodiode E, der hintere L2 auf die Photodiode F fällt, erzeugen das Spurfehlersignal $TE = ES - FS$. Mit AS, BS, CS, DS, ES und FS sind jeweils die Photospannungen der Dioden A, B, C, D, E und F bezeichnet.

In der Figur 1 folgt der mittlere Laserstrahl L1 genau der Mitte einer Spur S. Das Spurfehlersignal TE hat den Wert null.
$TE = ES - FS = 0$.

Wenn der mittlere Lichtstrahl von der Mitte einer Spur S abweicht, bewegt sich der eine Beugungsstrahl mehr zur Spurmitte hin, während der andere Beugungsstrahl auf den Zwischenraum zwischen zwei Spuren S strahlt. Weil aber die Reflexionseigenschaften einer Spur und eines Zwischenraumes unterschiedlich sind, wird der eine Beugungsstrahl stärker reflektiert als der andere.

In der Figur 2 ist der Fall dargestellt, daß die Laserstrahlen L1, L2 und L3 nach rechts von der Spur S verschoben sind. Das Spurfehlersignal nimmt einen negativen Wert an:
$TE = ES - FS > 0$.

Das Stellglied des Spurregelkreises bewegt die optische Abtastvorrichtung nun soweit nach links, bis das Spurfehlersignal TE null wird.

Im entgegengesetzten Fall, wenn die Laserstrahlen nach links von der Spur verschoben sind, ist das Spurfehlersignal positiv: $TE = ES - FS < 0$.

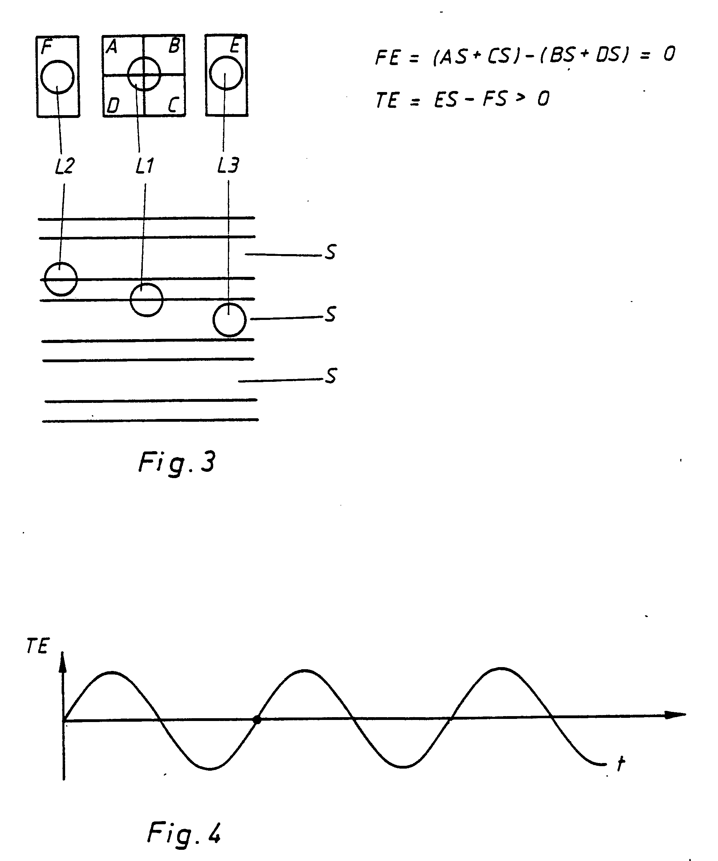

Nun bewegt das Stellglied des Spurregelkreises die optische Abtastvorrichtung so weit nach rechts, bis das Spurfehlersignal TE null wird. Dieser Fall ist in Figur 3 gezeigt.

Wenn der Lichtstrahl L1 und die zugehörenden Beugungsstrahlen L2 und L3 mehrere Datenspuren kreuzen, nimmt das Spurfehlersignal TE den in Figur 4 gezeigten sinusförmigen Verlauf an.

Aus der JP-OS 60 10429 ist ein Spurregelkreis bekannt, bei dem an der unteren und oberen Hüllkurve des HF-Signals erkannt wird, ob der Lichtstrahl Datenspuren kreuzt. Wenn der Lichtstrahl über mehrere Datenspuren läuft, bricht das HF-Signal regelmäßig zwischen zwei Spuren zusammen.

Um die Anzahl der vom Lichtstrahl überstrichenen Spuren festzustellen, wird die Hüllkurve des HF-Signals gebildet und in ein rechteckförmiges Signal umgewandelt, das dem Zähleingang eines Vorwärts-Rückwärts-Zählers zugeführt wird. Auf diese Weise werden von dem Vorwärts-Rückwärts-Zähler die HF-Einbrüche gezählt.

Um festzustellen, in welcher Richtung der Lichtstrahl bewegt wurde, radial nach innen oder außen, ist eine sogenannte Richtungslogik erforderlich. Es ist z.B. bekannt, dem D-Eingang eines D-Flip-Flops das Spurfehlersignal TE und seinem Takteingang die Einhüllende des HF-Signals zuzuführen. Das D-Flip-Flop erhält deshalb stets einen Impuls an seinem Takteingang, wenn der Lichtstrahl eine Datenspur kreuzt. Weil das Vorzeichen des Spurfehlersignals TE jedoch von der Richtung abhängt, in welcher der Lichtstrahl eine Datenspur verläßt, wird bei der einen Richtung das D-Flip-Flop gesetzt - sein Ausgang geht auf "HIGH" - , bei der anderen Richtung bleibt dagegen sein Ausgang auf "LOW". Das Signal am Q-Ausgang des D-Flip-Flops kann daher zur Bestimmung der Zählrichtung vorwärts oder rückwärts eines Vorwärts-Rückwärts-Zählers dienen. Deshalb zählt der Vorwärts-Rückwärts-Zähler im Fall der einen Richtung vorwärts, während er im Fall der anderen Richtung rückwärts zählt.

Diese bekannten Spurregelkreise haben neben dem großen Aufwand infolge der Richtungslogik außerdem noch den Nachteil, daß zum Spurspringen die Regelschleife des Spurregelkreises geöffnet wird. Die optische Abtastvorrichtung überstreicht deshalb ohne Kontrolle des Reglers die zu überspringenden Spuren auf dem Aufzeichnungsträger.

Es ist daher Aufgabe der Erfindung, ein Verfahren zum Spurspringen gemäß Oberbegriff des Anspruchs 1 so zu gestalten, daß das Spurspringen über eine oder mehrere Spuren bei geschlossenem Regelkreis erfolgen kann.

Die Erfindung löst diese Aufgabe dadurch, daß zum Springen über n Spuren dem Spurregelkreis eine Offset-Größe zugeführt wird, die so bemessen ist, daß der die Daten abtastende Lichtstrahl um einen vorgebbaren Betrag von der Spurmitte versetzt wird, so daß er teilweise auf die Spur und teilweise auf den Raum zwischen dieser Spur und der Nachbarspur strahlt, daß anschließend das Spurfehlersignal 2n-mal invertiert wird und daß die Offset-Größe spätestens nach der letzten Invertierung des Spurfehlersignals wieder vom Spurregelkreis abgetrennt wird.

Es zeigen

Figur 5 einen Spurregelkreis zur Durchführung des erfindungsgemäßen Verfahrens

Figur 6 die Bewegungen des Lichtstrahls beim Spurspringen gemäß einem ersten Ausführungsbeispiel

Figur 7 die Bewegungen des Lichtstrahls beim Spurspringen gemäß einem zweiten Ausführungsbeispiel.

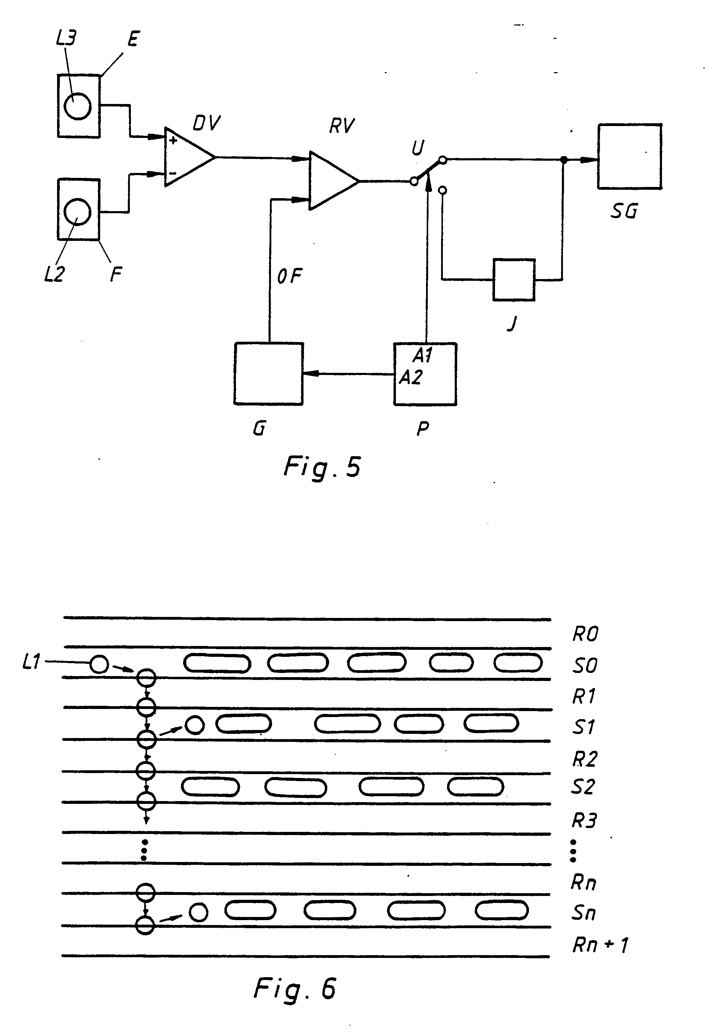

In Figur 5 werden die Ausgangssignale ES und FS der beiden Photodioden E und F den Eingängen eines Differenzverstärkers DV zugeführt, der das sinusförmige Spurfehlersignal TE erzeugt. Der Ausgang des Differenzverstärkers DV, an dem das sinusförmige Spurfehlersignal TE abnehmbar ist, ist mit dem ersten Eingang eines Regelverstärkers RV verbunden, dessen zweiter Eingang mit einem Generator G zur Erzeugung einer Offsetspannung OF verbunden ist. Der Ausgang des Regelverstärkers RV ist mittels eines steuerbaren Umschalters U entweder unmittelbar oder über einen Inverter I mit dem Stellglied SG des Spurregelkreises verbindbar. Der erste Ausgang A1 einer Steuerschaltung P ist mit dem Steuereingang des steuerbaren Umschalters U, der zweite Ausgang A2 mit dem Eingang des Generators G verbunden.

Anhand der in Figur 6 dargestellten Datenspuren S0 - Sn eines optischen Aufzeichnungsträgers wird nun die Funktion des in Figur 5 gezeigten Spurregelkreises erläutert.

Wenn der die Daten abtastende Lichtstrahl L1 über eine oder mehrere Spuren springen soll, bewirkt die Steuerschaltung P, daß der Generator G eine positive oder eine negative Offsetspannung OF an den zweiten Eingang des Regelverstärkers RV, der z.B. als Differenzverstärker ausgeführt sein kann, abgibt, je nachdem, ob der Lichtstrahl L1 radial nach innen oder nach außen über die Datenspuren fahren soll. Der Betrag der Offsetspannung OF ist so bemessen, daß der mittlere Lichtstrahl L1 nicht mehr in der Mitte der Spur S0 liegt, sondern nur noch teilweise, z.B. zur einen Hälfte auf die Spur S0 und zur anderen Hälfte auf den Streifen R1, den sogenannten Rasen, zwischen der Spur S0 und S1 strahlt. Der vordere und der hintere Lichtstrahl L2 und L3 sind dann ebenfalls um den gleichen Betrag radial nach innen oder außen versetzt.

Die Steuerschaltung P bewirkt nun durch Umschalten des steuerbaren Umschalters U, daß das Spurfehlersignal TE invertiert wird. Weil durch die Invertierung des Spurfehlersignals TE der Spurregelkreis nun anstatt auf die Spur auf den Rasen einrastet, wird der Lichtstrahl L1 vom Regelverstärker RV und dem Stellglied SG zum Rasen R1 geführt, jedoch wegen der Offsetspannung mit einem Versatz zur Rasenmitte. Zur Hälfte liegt der Lichtstrahl L1 noch im Rasen R1 zwischen den Spuren S0 und S1, aber mit einer Hälfte strahlt er bereits auf die Spur S1. Nun wird das Spurfehlersignal TE erneut invertiert. Weil jetzt der Spurregelkreis wieder auf die Spur einrastet, bewegt sich der Lichtsrahl L1 um eine Spurbreite weiter, so daß er je zur Hälfte die Spur S1 und den Rasen R2 beleuchtet. Durch Wegnehmen der Offsetspannung wandert er genau in die Mitte der Spur S1.

Soll der Lichtstrahl über n Spuren springen, so wird das Spurfehlersignal TE von der Steuerschaltung P mittels des Umschalters U und des Inverters I 2n-mal nacheinander invertiert. Nach jeder Invertierung springt der Lichtstrahl um eine Spurbreite weiter. Der Spurregelkreis rastet abwechselnd auf den Rasen und die Spur ein. Wegen der Offsetspannung bewegt sich der Licht strahl L1 jedoch nicht von Spurmitte zu Rasenmitte, sondern jeweils um den gleichen vorgegebenen Betrag gegen die Mitte versetzt. Nach 2n Invertierungen hat der Lichtstrahl die zu überspringenden n Spuren übersprungen. Die Steuerschaltung P bewirkt daher, nachdem sie 2n-mal das Spurfehlersignal TE invertiert hat, daß der Regelverstärker RV wieder von der Offsetspannung OF getrennt wird. Dadurch wandert der Lichtstrahl genau in die Mitte der gewünschten Spur. Bei der Erfindung bleibt der Spurregelkreis während des Spurspringens stets geschlossen.

Die Zeitpunkte für die Invertierung des Spurfehlersignals TE können z.B. in Abhängigkeit vom Pegel des HF-Signals, das beim Dreistrahlverfahren aus den Ausgangssignalen der Photodioden A, B, C und D gewonnen wird, festgelegt werden. Wenn der Lichtstrahl L1 genau auf die Spurmitte gerichtet ist, wird der Pegel des HF-Signals maximal; strahlt der Lichtstrahl L1 dagegen auf den Raum zwischen zwei Spuren, für den der Fachausdruck "Rasen" lautet, so bricht das HF-Signal zusammen. Beleuchtet der Lichtstrahl L1, der Hauptstrahl, infolge der Offsetspannung z.B. je zur Hälfte die Spur und den Rasen, so beträgt der Pegel des HF-Signals etwa 50 % des maximalen Wertes. Es kann daher ein Schwellwert von 50 % des maximalen Pegels als Kriterium für den Zeitpunkt der Invertierung des Spurfehlersignals TE vorgesehen werden.

Jedesmal, wenn der Pegel des HF-Signals vom maximalen Wert auf etwa die Hälfte absinkt und wenn er von null wieder auf die Hälfte ansteigt, wird das Spurfehlersignal TE invertiert. Dies geschieht das erste Mal, wenn der Lichtstrahl L1 durch Anlegen der Offsetspannung aus der Spurmitte gelenkt wird, so daß er je zur Hälfte die Spur S0 und den Rasen R1 beleuchtet. Wegen der Invertierung des Spurfehlersignals führt der Spurregelkreis jetzt den Lichtstrahl L1 über den Rasen R1 zur Nachbarspur S1, wobei das HF-Signal zunächst zusammenbricht, um anschließend auf etwa den halben Maximalwert anzusteigen, wenn der Lichtstrahl L1 zur Hälfte noch auf den Rasen R1 und zur Hälfte schon auf die Spur S1 strahlt. Weil nun das Spurfehlersignal zum zweiten Mal invertiert wird, bewegt sich der Lichtstrahl L1 in die Spur S1. Wegen der Offsetspannung bleibt er aber nicht in der Spurmitte stehen, sondern wandert weiter an den Rand, bis er je zur Hälfte noch auf die Spur S1 und bereits auf den nächsten Rasen R2 strahlt. Der Pegel des HF-Signals steigt daher zuerst auf den maximalen Wert an und fällt anschließend zum zweiten Mal vom Maximalwert auf die Hälfte ab. Nun wird das Spurfehlersignal TE wieder invertiert, damit sich die beschriebenen Vorgänge wiederholen und der Lichtstrahl L1 wieder eine Spur kreuzt.

Wie bereits erläutert, wird beim Springen über z.B. 100 Spuren nach 200 Invertierungen des Spurfehlersignals TE die Offsetspannung vom Spurregelkreis abgetrennt, damit der Lichtstrahl L1 zurück in die Spurmitte geführt wird.

Die Offsetspannung kann sogar schon vor der ersten Invertierung des Spurfehlersignals vom Spurregelkreis abgetrennt werden. Sie muß aber spätestens nach der letzten Invertierung des Spurfehlersignals vom Spurregelkreis abgetrennt werden. Welcher Zeitpunkt für die Abtrennung der Offsetspannung günstig ist, hängt vom Typ des Spurregelkreises ab. Der günstigste Zeitpunkt kann z.B. durch Versuche ermittelt werden. Ohne die Offsetspannung OF würde sich der Lichtstrahl L1 nach der Invertierung des Spurfehlersignals TE nicht definiert, sondern zufällig radial nach innen oder außen bewegen.

Bei einigen Spurregelkreisen kann es vorkommen, daß die optische Abtastvorrichtung während des Spurspringens immer schneller wird, so daß der Spurregelkreis außer Kontrolle gerät, wenn die Offsetspannung erst nach der letzten Invertierung des Spurfehlersignals vom Spurregelkreis getrennt wird.

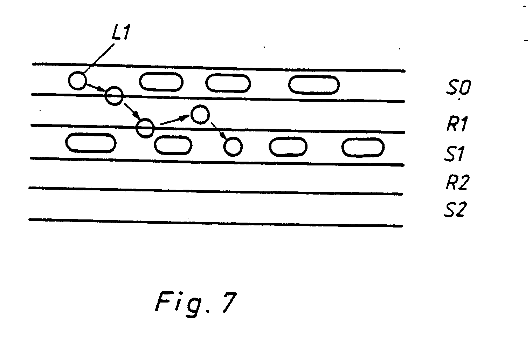

Bei einem zweiten Ausführungsbeispiel der Erfindung wird daher zum Springen von einer Spur zur nächsten die Offsetspannung be reits vor oder nach der ersten Invertierung, also noch vor der zweiten Invertierung des Spurfehlersignals, vom Spurregelkreis abgetrennt. Zum Springen über mehrere Spuren wird dieses Verfahren von Spur zu Spur wiederholt. In Figur 7 sind die Bewegungen des Lichtstrahls L1 für das zweite Ausführungsbeispiel gezeigt.

Der Lichtstrahl L1 wird wie beim ersten Ausführungsbeispiel durch die Offsetspannung OF so weit von der Mitte der Spur S0 versetzt, daß er zur Hälfte auf die Spur S0 und zur Hälfte auf den Rasen R1 strahlt. Nun wird das Spurfehlersignal zum ersten Mal invertiert. Weil sich der Lichtstrahl deshalb um eine Spurbreite weiter bewegt, strahlt er jetzt zur Hälfte auf den Rasen R1 und die Spur S1. Nun wird die Offsetspannung OF weggenommen. Der Lichtstrahl L1 bewegt sich daher in die Mitte des Rasens R1. Die zweite Invertierung des Spurfehlersignals TE bewirkt jetzt, daß der Lichtstrahl L1 in die Mitte der Spur S1 wandert. Soll er über mehrere Spuren springen, so werden die angegebenen Verfahrensschritte wiederholt.

Die Erfindung ist z.B. für CD-Spieler, Videoplattenspieler, DRAW-Disc-Spieler oder magneto-optische Geräte geeignet.

## Ansprüche

1. Verfahren zum Spurspringen in einem Spurregelkreis mit einer optischen Abtastvorrichtung, bei der ein erster und ein zweiter Lichtstrahl (L2, L3) von einem Aufzeichnungsträger auf je eine Photodiode (E, F) reflektiert werden und bei der aus den Ausgangssignalen (ES, FS) der bei den Photodioden (E, F) durch die Differenzbildung ein sinusförmiges Spurfehlersignal (TE), die Abweichung des Istwerts vom Sollwert, erzeugt wird, **dadurch gekennzeichnet**, daß zum Springen über n Spuren dem Spurregelkreis eine Offset-Größe (OF) zugeführt wird, die so bemessen ist, daß der die Daten abtastende Lichtstrahl (L1) um einen vorgebbaren Betrag von der Spurmitte versetzt wird, so daß er teilweise auf die Spur (S0) und teilweise auf den Raum (R1) zwischen dieser Spur (S0) und der Nachbarspur (S1) strahlt, daß anschließend das Spurfehlersignal (TE)·2n-mal invertiert wird und daß die Offset-Größe (OF) spätestens nach der letzten Invertierung des Spurfehlersignals (TE) wieder vom Spurregelkreis abgetrennt wird.

2. Verfahren nach Anspruch 1, **dadurch gekennzeichnet**, daß die Offset-Größe (OF) nach der ersten Invertierung des Spurfehlersignals (TE) wieder vom Spurregelkreis abgetrennt wird.

3. Verfahren nach Anspruch 1,**dadurch gekennzeichnet**, daß zum Springen von einer Spur zur nächsten die Offset-Größe (OF) vor oder unmittelbar nach der ersten Invertierung des Spurfehlersignals (TE) wieder vom Spurregelkreis abgetrennt wird.

4. Verfahren nach Anspruch 3, **dadurch gekennzeichnet**, daß zum Springen über mehrere Spuren das Verfahren gemäß Anspruch 3 wiederholt wird.

5. Verfahren nach Anspruch 1, 2, 3 oder 4 **dadurch gekennzeichnet**, daß das Vorzeichen der Offset-Größe (OF) von der Sprungrichtung - radial nach innen oder radial nach außen - abhängt.

6. Verfahren nach Anspruch 1, 2, 3, 4 oder 5, **dadurch gekennzeichnet**, daß die Zeitpunkte für die Invertierung des Spurfehlersignals (TE) vom Pegel des HF-Signals abhängen, das mittels des die Daten abtastenden Lichtstrahls (L1) erzeugt wird.

7. Spurregelkreis zur Durchführung des Verfahrens nach Anspruch 1, 2, 3, 4, 5 oder 6, **dadurch gekennzeichnet**, daß das Spurfehlersignal (TE) dem ersten Eingang eines Regelverstärkers (RV) zugeführt wird, dessen zweiter Eingang mit dem Ausgang eines Generators (G) verbunden ist, der eine positive oder eine negative Offsetspannung (OF) erzeugt, daß der Ausgang des Regelverstärkers (RV) mit dem Eingang eines steuerbaren Umschalters (U) verbunden ist, dessen erster Ausgang unmittelbar und dessen zweiter Ausgang über einen Inverter (I) mit dem Stellglied (SG) des Spurregelkreises verbunden ist, daß der erste Ausgang (A1) einer Steuerschaltung (P) mit dem Generator (G) und daß der zweite Ausgang (A2) der Steuerschaltung (P) mit dem Steuereingang des steuerbaren Umschalters (U) verbunden ist.

8. Spurregelkreis nach Anspruch 7, **dadurch gekennzeichnet**, daß in der Steuerschaltung (P) ein Zähler vorgesehen ist, um die Anzahl der Invertierungen des Spurfehlersignals (TE) zu zählen.

9. Spurregelkreis nach Anspruch 7 oder 8, **dadurch gekennzeichnet**, daß ein HF-Detektor vorgesehen ist, der ein Signal an die Steuerschaltung (P) zur Invertierung des Spurfehlersignals (TE) abgibt, wenn der Pegel des HF-Signals einen vorgebbaren Schwellwert animmt.

Fig. 1

$$HF = AS + BS + CS + DS$$

$$FE = (AS + CS) - (BS + DS) = 0$$

$$TE = ES - FS = 0$$

Fig. 2

$$FE = (AS + CS) - (BS + DS) = 0$$

$$TE = ES - FS < 0$$

$$FE = (AS + CS) - (BS + DS) = 0$$

$$TE = ES - FS > 0$$

Fig. 3

Fig. 4

L3  E

DV  RV  U

L2  F

0F

SG

J

G  A1
A2
P

Fig. 5

L1

R0
S0
R1
S1
R2
S2
R3
⋮
Rn
Sn
Rn + 1

Fig. 6

*Fig. 7*

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4779251 (BURROUGHS) <br> * Zusammenfassung; Figuren 1-5 * <br> * Spalte 2, Zeilen 35 - 60 * <br> * Spalte 3, Zeilen 11 - 56 * <br> * Ansprüche 1, 2, 5-10 * | 1, 5-7 | G11B7/085 |
| A | | 2-4, 8, 9 | |
| X | PATENT ABSTRACTS OF JAPAN <br> vol. 9, no. 157 (P-369)(1880) 02 Juli 1985, <br> & JP-A-60 032134 (RICOH K.K.) 19 Februar 1985, <br> * das ganze Dokument * | 1, 2 | |
| A | | 3, 4, 7, 9 | |
| A | US-A-4698795 (YOSHIO) <br> * Zusammenfassung; Figuren 3-5 * <br> * Spalte 2, Zeile 40 - Spalte 2, Zeile 59 * <br> * Spalte 3, Zeile 18 - Spalte 4, Zeile 32 * <br> * Spalte 4, Zeile 65 - Spalte 5, Zeile 12 * <br> * Anspruch 1 * | 1, 5-9 | **RECHERCHIERTE SACHGEBIETE (Int. Cl.5)** |
| A | PATENT ABSTRACTS OF JAPAN <br> vol. 5, no. 96 (P-67)(768) 23 Juni 1981, <br> & JP-A-56 041536 (TOKYO SHIBAURA DENKI K.K.) 18 April 1981, <br> * das ganze Dokument * | 1, 2 | G11B |
| A | PATENT ABSTRACTS OF JAPAN <br> vol. 9, no. 2 (P-325)(1725) 08 Januar 1985, <br> & JP-A-59 152567 (TOSHIBA K.K.) 31 August 1984, <br> * das ganze Dokument * | 1, 2 | |

Der vorliegende Recherchenbericht wurde für alle Patentansprüche erstellt

| Recherchenort | Abschlußdatum der Recherche | Prüfer |
|---|---|---|
| DEN HAAG | 09 AUGUST 1990 | BENFIELD A.D. |